# EUROPEAN PATENT APPLICATION

(11) **EP 4 674 257 A1**
(43) Date of publication of application: **07.01.2026**
(21) Application number: 25186693.5
(22) Date of filing: 01.07.2025
(51) Int. Cl.: A01G 25/09, B60P 1/02

(54) **MOTOR PUMP**

(30) Priority: 05.07.2024 IT 202400015538
(71) Applicant: Irriland S.R.L., 42016 San Giacomo Guastalla Reggio Emilia (IT)
(72) Inventor: MANGHI, Claudio, 42011 BAGNOLO IN PIANO (RE) (IT)
(74) Representative: Paparo, Aldo

(57) **Abstract**

A motor pump 1, for drawing water from a supply reservoir B to be sprayed over a plot of land by means of an irrigation system I, comprising a pumping unit 2 having a motor 3, a pump 4, driven by the motor 3, and a drawing tube 5, movable and insertable by immersion into the supply reservoir B to draw water and introduce it under pressure, as a result of the action of the pump 4, into the irrigation system I.

The motor pump further comprises a first frame 6 having a supporting base 7 having the pumping unit 2 on board at the top, and a second frame 8 having a pair of wheels 9 at the bottom to allow movements of the second frame 8 over the ground, said second frame 8 being reversibly movable, under the action of movement means 10, from an engagement position, in which the first frame 6 is raised on board the second frame 8 so as to render the two frames 6,8 solidly joined and transportable by means of the pair of wheels 9, to a disengagement position, in which the first frame 6 is disconnected from the second frame 8 so as to allow a separation of the second frame 8 from the first frame 6, leaving the latter with the supporting base 7 resting on the ground.

## Description

The present invention relates to a motor pump and has a particular area of application in the sector of agriculture, but can also be used in any other area of application in which the transport of a fluid is necessary.

In the specific sector of agriculture, a motor pump is generally used to irrigate the crop fields and is transported close to a water source, such as, for example, a river, a canal, a well or a collection tank, in order to draw water and introduce it under pressure into an irrigation system.

The motor pump is generally defined by a frame on which a pumping assembly defined by a motor, a pump and a drawing tube is present. At the bottom, the motor pump has a pair of wheels that allows it to be transported, when hooked up to a tractor, from a storage warehouse close to the supply source. The pair of wheels therefore allows the motor pump to be transported for long distances, which could involve sections of road and/or sections of agricultural land.

Several years ago, a new EU regulation was passed, "Regulation 2016/1628", which came into force in 2017, relating dispositions related to gaseous pollutant emission limits for internal combustion engines for non-road mobile machinery.

The base provision of the Regulation provides for the obligation of equipping the motor pump with a stage V type diesel engine if it is mobile, i.e. it has wheels to be transported. Conversely, if the motor pump does not have wheels, it is permitted to equip it with a stage IV type diesel engine or lower. The practical result of this Regulation, considering the operating need of having a movable motor pump, has been equipping all motor pumps with stage V diesel engines.

This regulation has been introduced in order to limit the harmful effects of the emissions from diesel engines. The truth is that this regulation tends to penalise the user of motor pumps which, as non-road mobile machinery, do not have a use, in terms of frequency and duration, comparable to other non-road mobile machinery, such as construction machinery (diggers, shovels, bulldozers, etc.), or such as rail cars, locomotives and ships for navigation on inland waterways. In terms of frequency, use of an agricultural machine such as a motor pump is also strictly seasonal (in drier periods) and therefore much lower than use of construction machinery or use of a locomotive or use of a ship. In terms of duration, the use of a motor pump is much shorter, if the duration of an irrigation cycle is compared, for example, to the duration of construction work at a building site.

The disadvantages are technical in nature for a manufacturer, who is forced to alter its entire range of motor pumps, and financial in nature for the final user, who obtains a product with an increase in costs of around 200%.

The technical task of the present invention is therefore to provide a motor pump that is able to overcome the drawbacks that have emerged from the prior art.

An object of the present invention is to provide a motor pump that is movable over distances, whether long or short, and that can at the same time be equipped with stage IV type diesel engines (or lower) in compliance with the EU regulation cited above.

The specified technical task and the specified objects are substantially achieved by a motor pump comprising the technical features set forth in one or more of the appended claims.

The dependent claims correspond to possible embodiments of the invention.

Further characteristics and advantages of the present invention will become more apparent from the indicative and thus non-limiting description of an embodiment of a motor pump.

Such a description will be set out below with reference to the accompanying drawings, which are provided solely for illustrative and therefore non-limiting purposes, in which:
Figure 1 shows, in perspective view, a motor pump in accordance with the present invention, in a first transport configuration.
Figure 2 shows, in perspective view, the motor pump of Figure 1 in an engagement configuration.
Figure 3 shows, in perspective view, the motor pump of Figure 1 in an unloading configuration.
Figure 4 shows, in perspective view, a component of the motor pump.
Figure 5 shows, in perspective view, a second component of the motor pump.

With reference to the appended figures, the number 1 denotes a motor pump in its entirety.

The motor pump 1 is a piece of agricultural equipment used to draw water from a supply reservoir B and introduce it under pressure into an irrigation system I. As indicated in the introduction, the supply reservoir B can be a river, a canal, a well, a collection tank or any other source suitable for providing water. In order for the motor pump 1 to be able to dispense water under pressure, a pumping unit 2 is present on board it. The pumping unit 2 has three main components: a motor 3, a pump 4 and a drawing tube 5. The motor 3 is preferably of the stage IV type or lower. The motor 3 drives a pump 4, preferably of the centrifugal type. The pump has an inlet 41 inside which the water drawn from the supply reservoir B arrives and an outlet 42 outside which the pressurised liquid exits, in order preferably to be introduced into an irrigation system I. The pump 4 is hydraulically connected to the drawing tube 5 provided with a first and a second connection end 51,52. The first end 51 is stably connected to the inlet 41 of the pump 4, whereas the second end 52 is alternatively insertable by immersion inside the supply reservoir B.

The drawing tube 5, in a known way, can be formed of several sections, some intended to make connections to the other components of the pumping unit 2, others intended to be alternatively extracted from/immersed into the supply reservoir B.

The entire pumping unit 2 is mounted on board a first frame 6 defined mainly by a supporting base 7.

The supporting base 7 can have a box shape or can be obtained from a bearing structure similar to the chassis of motor vehicles.

Below, i.e. on the opposite part to where the pumping unit 2 is present, a fifth wheel 19 is present. The fifth wheel 19, the actuation of which will be described in the continuation of the application, allows, on being pushed by an operator, rotations to be made around a vertical axis Y of the supporting base 7 and therefore of the first frame 6.

The first frame 6 further comprises a coupling means 11.

The coupling means 11 is interceptable by the second frame 8 when this reaches the engagement position.

Advantageously, the coupling means 11 comprises at least two opposing pairs of coupling devices 11a,11b associated laterally with the first frame 6.

In detail, a first pair of coupling devices 11a,11b is arranged on the right side of the first frame 6, with respect to the direction of advancement of the motor pump 1, and a second pair of coupling devices 11a,11b is arranged on the left side of the first frame 6.

The coupling devices 11a,11b of each pair are distanced from each other and define, with the second frame 8, a substantially point-like contact area.

In other words, the first frame 6 comes into contact with the second frame 8 only at predefined zones.

In accordance with the preferred embodiment, the pairs of coupling devices 11a,11b comprise front coupling devices 11a associated at the front with the first frame 6 and rear coupling devices 11b associated at the back with the first frame 6.

The front coupling devices 11a and the rear coupling devices 11b define between them a free volume.

Such arrangement allows a uniform distribution of the weight of the pumping unit 2 to be obtained and the stability thereof during transport to be guaranteed.

Furthermore, the presence of a free volume between the coupling devices 11a,11b allows the user to have easy access to the pumping unit and to allow the passage of tubes or other components.

Still further, the distance interposed between the coupling devices 11a,11b favours the user's visibility during positioning of the second frame 8 and allows the mutual position between the first frame 6 and the second frame 8 to be checked immediately.

Each of the coupling devices 11a,11b comprises at least one column 12 connected to the base 7 and at least one pin 13 associated with each column 12.

Each of the columns 12 is projecting with respect to the base 7 along a substantially vertical direction.

This allows a greater stability of the pumping unit 2 during transport to be obtained.

The pin 13 extends from the respective column 12 away from the first frame 6 along a substantially horizontal direction and defines together with the other pins an ideal engagement plane.

In detail, the pin 13 extends towards the outside of the motor pump 1.

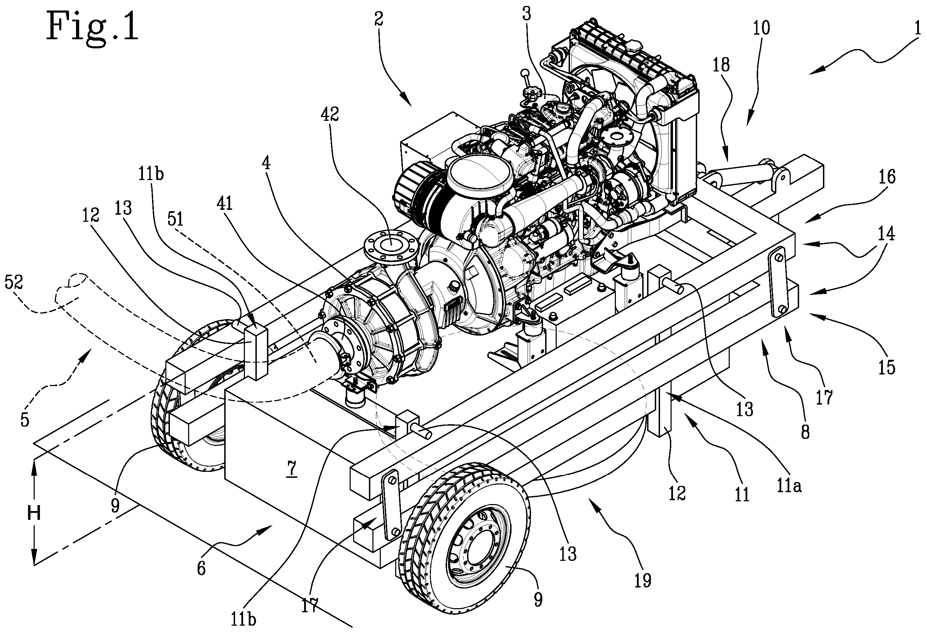

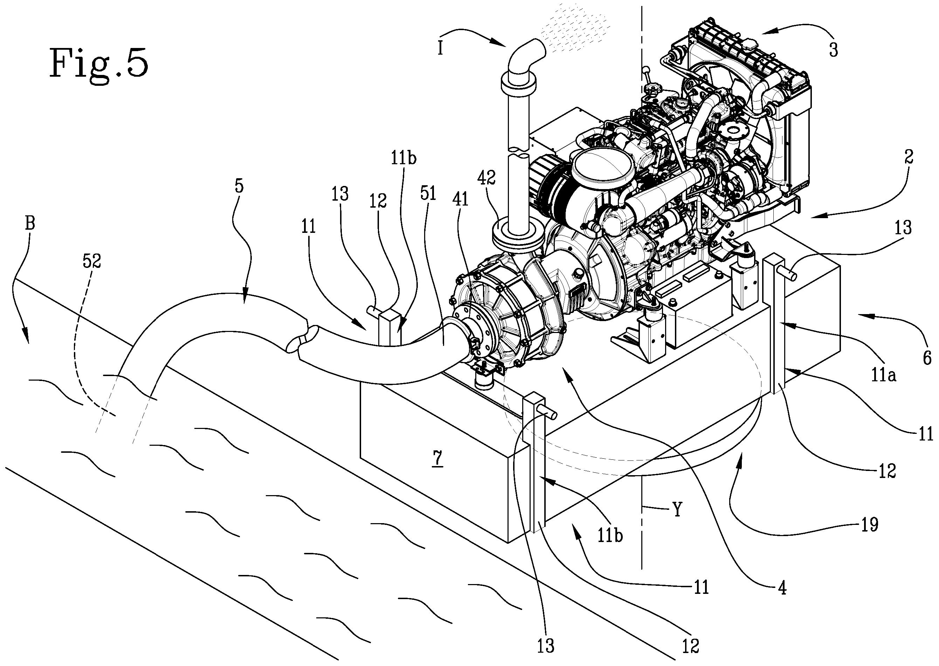

Said coupling means 11 is, therefore, defined by a plurality of columns 12 connected to the base 7. As is visible in the appended figures 1 to 3 and 5, the plurality of columns 12 is preferably defined by a set of four columns 12 (in the cited figures, only three columns are visible, as the fourth is covered by the pumping unit 2). The term column 12 means a bar, with mainly vertical extension, connected to the supporting base 7. The coupling means 11 further comprises a plurality of pins 13. As is visible in the appended figures 1 to 3 and 5, the plurality of pins 13 is defined by a set of four pins 13 (in the cited figures, only three pins are visible, as the fourth is covered by the pumping unit 2). The plurality of columns 12 and the plurality of pins 13 are in a relationship of connection with each other, so that one pin 13 is connected to a column 12.

Each pin 13 has an extension, from the respective column 12 to which it is connected, away from the first frame 6 and therefore from the respective column 12.

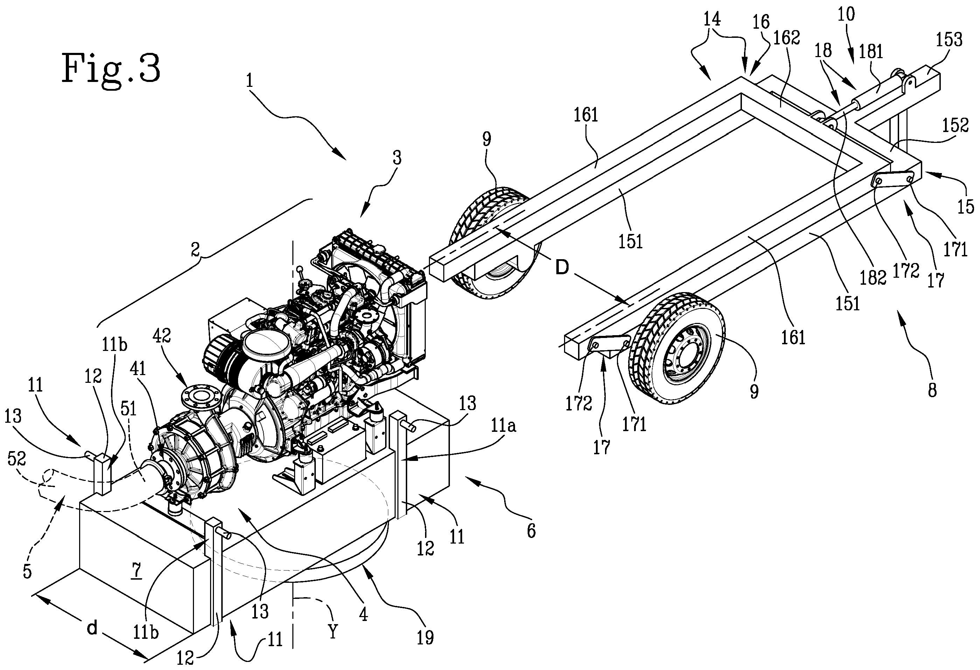

Using Figure 3 as a reference, it is possible to see a first pair of pins 13 on the right side of the base 7 that extend away from it. The other pair of pins 13 present on the left side of the base 7 extend away from the base 7 (in Figure 3, only one of the two is visible). In other words, the first pair of pins extends, from the respective columns 12, in the opposite direction to the direction of extension of the other pair of pins 13.

The direction of extension of each pin belonging to the plurality of pins 13 is preferably horizontal. Alternatively, the plurality of pins 13 can extend, according to the opposite mode described previously, also along oblique directions.

The plurality of pins 13 defines an ideal plane of interception of the first frame 6.

The motor pump 1 further comprises a second frame 8 interacting with the first frame 6 to allow horizontal and vertical translations of the first frame 6. Below, the second frame 8 provides for a pair of wheels 9 that allow the movement of at least the second frame 8 along roads and/or agricultural land.

The second frame 8 is reversibly movable, under the action of movement means 10, from an engagement position, in which the first frame 6 is raised on board the second frame 8 so as to render the two frames solidly joined and transportable by means of the pair of wheels 9, to a disengagement position, in which the first frame 6 is disconnected from the second frame 8 so as to allow a separation between the two frames and, at the same time, an offloading of the second frame 6 resting on the ground. In particular, the movement means 10, better described below, allows the second frame 8 to be taken from the engagement position to the disengagement position and vice versa.

The second frame 8 is defined by an articulated frame 14 formed of a base and a top. The pair of wheels 9 are provided at the base. The top is movable relative to the base from a near position, in which the second frame 8 reaches the position of disengagement from the first frame 6, to a distanced position, in which the second frame 8 reaches the position of engagement with the first frame 6.

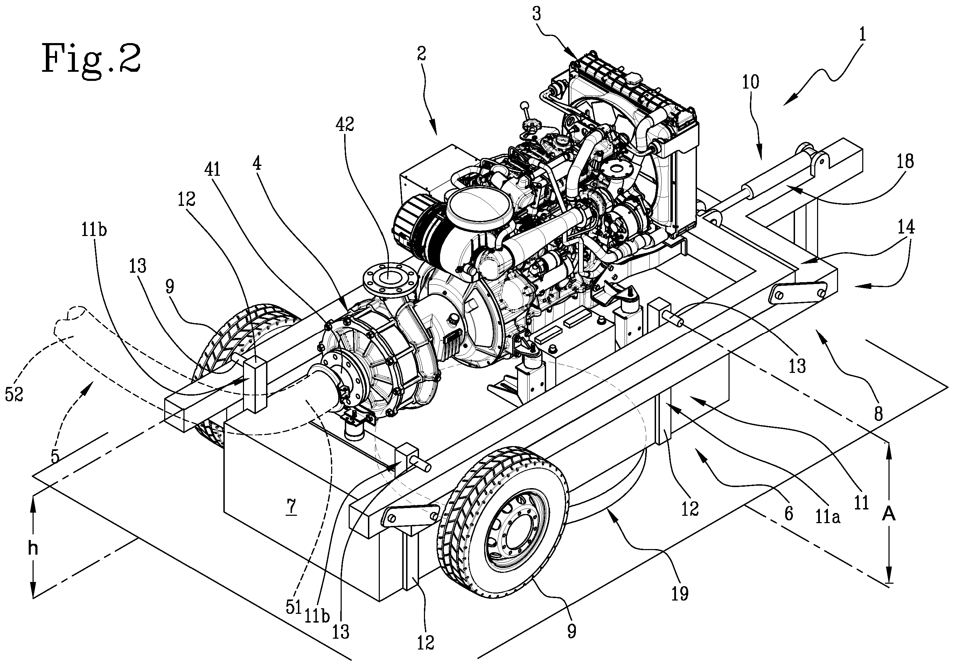

In Figure 3, the near position is shown, in which the second frame 8 is close to the first frame 6 and reaches a minimum height with respect to the level of the ground. In Figure 1, the distanced position is shown, in which the second frame 8 is distanced from the first frame and reaches a greater height with respect to the level of the ground. Figure 2 shows an intermediate position, in which the second frame 8 proceeds in raising or in lowering respectively to engage the first frame 6 or to disengage the first frame 6. The height with respect to the ground reached by the second frame 8, shown in Figure 2, is intermediate to the lower height and the greater height.

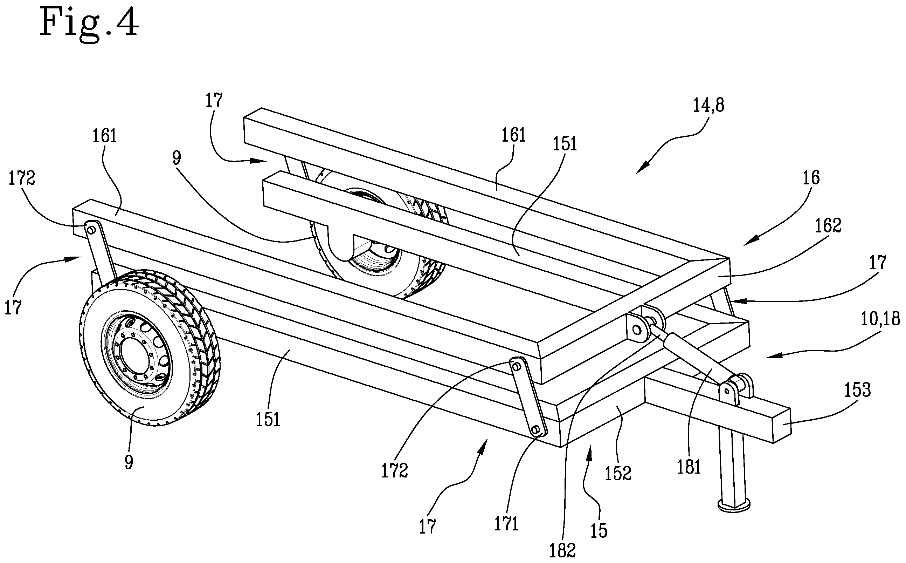

As is visible in Figure 4, the articulated frame 14 comprises a first fixed fork 15, a second fork 16 and a plurality of arms 17.

The first fixed fork 15 is connected below to the pair of wheels 9. Said first fixed fork 15 has two first beams 151 connected to the same end by a first cross member 152. At the opposite part to where the first cross member 152 is present, the first fixed fork 15 is free, i.e. it has the two first beams 151 not connected to each other.

The first two beams 151 are parallel to each other and coupled on the same side by the first cross member 152 perpendicular to the first two beams 151.

The second fork 16 is connected to the first fixed fork 15 and has two second beams 161 connected to the same end by a second cross member 162. At the opposite part to where the second cross member 162 is present, the second fork 162 is also free, i.e. it has the two second beams 161 not connected to each other. As is visible in Figure 4, the first fork 15 is substantially similar to the second fork 16 and both, on the opposite side to where the first and second cross beam 152,162 are present, are open to define an access opening through which the second frame 8 embraces the first frame 6.

The connection between the first and second forks 15,16 is obtained through a plurality of arms 17. Each arm belonging to the plurality of arms 17 has a first end 171, hinged to the fixed fork 15, and a second end 172, hinged to the movable fork 16.

The movement of the movable fork 16 with respect to the fixed fork 15 occurs by means of movement means 10 defined by an actuator 18, preferably hydraulic, operable by hydraulic motor means provided on board a tractor, to favour a distancing or an approach of the second movable fork 16 with respect to the first fixed fork 15. Once again in Figure 4, it is possible to note how the actuator 18 has a sleeve 181 hinged in proximity to the first cross member 152 and a rod 182 hinged onto the second cross member 162.

When the actuator 18 is completely elongated, the second beams 161 are resting on the first beams 151, thus obtaining a compact configuration, shown in Figure 4. In this configuration, the first and the second beams 151,161 are at a lower height with respect to the one defined by the plurality of pins 13, to allow the second frame 8 to embrace the first frame 6.

When the actuator 18 is completely retracted, the second beams 161 are distanced from the first beams 151, reaching the maximum distance and thus obtaining first the engagement and then the raising, as a result of the contact of the second beams 161 with the plurality of pins 13, of the second frame 8 with respect to the first frame 6.

In order for synergy to exist between the plurality of arms 17 and the actuator 18, it is preferable for the latter to have an inclined orientation with respect to a horizontal plane. In order to place the actuator 18 in an oblique position, the sleeve 181 thereof is hinged to a towbar 153, belonging to the first fixed frame 15, and distanced from the first cross member 152.

Taking as a reference the overall dimensions of the first frame 6, in particular of the base 7, and of the second frame 10, it is possible to define the following proportions. The transverse dimension of the base is equal to "d", whereas the distance between centres between the first and second beams is "D", with the geometric condition that "d" is lower than "D". In this manner, as a result of the distance between centres "D" greater than the transverse dimension of the base "d", it is possible to engage the second frame 8 on the first frame 6.

The dimension in height of the base 7, or the distance between the plurality of pins 13 and the level of the ground, is equal to "A", whereas the positioning of the second movable fork 16 reaches reversible height "h", with "h" lower than "A" to allow a second pair of beams 161 to be inserted below the plurality of pins 13, and height "H", with "H" higher than "A" to allow the second pair of beams 161 to engage and raise the plurality of pins 13 and with it the first frame 6.

The motor pump 1 operates in the following manner.

In a condition of non-use, the first frame 6 can be left in a storage area with the second frame 8 disconnected from the first frame 6.

At the moment when it is necessary to actuate a movement to use the motor pump 1, the operator takes the second frame 8 and attaches it, by means of the towbar 153, to the tractor. The operator subsequently brings the tractor close to the first frame 6 and, checking that the second frame 8 has the second movable fork 16 completely lowered, therefore resting on the first fork 15, proceeds to embrace the first frame 6. Once the correct positioning of the second frame 8 has been reached, the operator activates the movement means 10 and proceeds to raise the second fork 16 with respect to the first fork 15. As the second fork continues its ascent, the second beams 161 enter into contact with the plurality of pins 13 and, continuing in the ascent motion, raise the first frame 6.

Once the second frame 8 is in the position of engagement with the first frame 6, the operator can bring the first and second frames 6,8 close to the supply reservoir B. At this point, the operator can command the descent of the second fork 16, so as to have a progressive lowering of the first frame 6 until the base 7 comes into contact with the ground. The descent of the second beams 161 continues until they reach a height "h" positioned below the height "A" of the plurality of pins 13. In this transient, the operator can proceed to disengage the second frame 8 from the first frame 6. At this point, the operator can rotate the first frame 6 to bring the pumping unit 2 close to the supply reservoir B by pushing the base 7 and making it rotate around the vertical axis Y of the fifth wheel 19.

The invention achieves important advantages.

First of all, the motor pump 1 is a piece of agricultural equipment that is mobile during transport operations, like the traditional motor pumps, but during use it does not have the pair of wheels on board the motor pump 1 that would make it a movable system that must necessarily be equipped with a stage V engine.

This allows an engine 3 of the stage IV type or lower to be applied to the motor pump 1, in compliance with the European Regulation cited in the description.

This allows the motor pump manufacturer to equip the agricultural machinery with more economical but equally performing engines, without increasing the overall cost of the agricultural machinery.

In addition, the system, as a result of the second frame 10 removable from the first frame 6, allows the motor pump to occupy lower dimensions both during storage operations and during use.

## Claims

1. A motor pump (1), for drawing water from a supply reservoir (B) to be sprayed over a plot of land by means of an irrigation system (I), of the type comprising:
- a pumping unit (2) comprising a motor (3), a pump (4), driven by the motor (3), for drawing water from a supply reservoir (B) and provided with an inlet (41) and an outlet (42) for the irrigation fluid, said pumping unit (2) further comprising a drawing tube (5) having a first end (51) stably fixed to the inlet (41) of the pump (4) and a second movable end (52) insertable into the supply reservoir (B) by immersion in order to draw water and introduce it under pressure into the irrigation system (I) by virtue of the action of the pump (4);
- a first frame (6) having a supporting base (7) having the pumping unit (2) on board at the top thereof;
**characterised in that** it further comprises a second frame (8) having a pair of wheels (9) at the bottom to allow movements of the second frame (8) over the ground; said second frame (8) being reversibly movable, under the action of movement means (10), from an engagement position, in which the first frame (6) is raised on board the second frame (8) so as to render the two frames (6,8) solidly joined and transportable by means of the pair of wheels (9), to a disengagement position, in which the first frame (6) is disconnected from the second frame (8) so as to allow a separation of the second frame (8) from the first frame (6), leaving the latter with the supporting base (7) resting on the ground.

2. The motor pump (1) according to claim 1, wherein said first frame (6) further comprises a coupling means (11), interceptable by the second frame (8) when the latter reaches the engagement position.

3. The motor pump (1) according to claim 2 wherein said coupling means (11) comprises at least two opposite pairs of coupling devices (11a,11b) associated laterally with said first frame (6), where the coupling devices (11a,11b) of each pair are distanced from one another and define, with said second frame (8), a substantially point-like contact area.

4. The motor pump (1) according to claim 3, wherein said pairs of coupling devices (11a,11b) comprise front coupling devices (11a) associated at the front with said first frame (6) and rear coupling devices (11b) associated at the back with said first frame (6), where the front coupling devices (11a) and the rear coupling devices (11b) define between them a free volume.

5. The motor pump (1) according to claim 3, wherein each of said coupling devices (11a,11b) comprises at least one column (12) connected to the base (7) and at least one pin (13) associated with each column (12), extending from the respective column (12) away from the first frame (6) along a substantially horizontal direction and defining together with the other pins an ideal engagement plane.

6. The motor pump (1) according to claim 5, wherein each of said columns (12) is projecting with respect to the base (7) along a substantially vertical direction.

7. The motor pump (1) according to claim 2, wherein said coupling means (11) is defined by a plurality of columns (12), connected to the base (7), and by a plurality of pins (13), providing for each column (12) a corresponding pin (13); each pin belonging to the plurality of pins (13) extending, from the respective column (12), away from the first frame (6) along a preferably horizontal direction and defining, together with other pins, an ideal engagement plane.

8. The motor pump (1) according to claim 2, wherein said second frame (8) is defined by an articulated frame (14) having a base provided with the pair of wheels (9) and a top that is movable relative to the base from a near position, in which the second frame (8) reaches the position of disengagement from the first frame (6), to a distanced position, in which the second frame (8) reaches the position of engagement with the first frame (6).

9. The motor pump (1) according to claim 7 and 8, wherein said articulated frame (14) comprises:
- a first fixed fork (15), connected at the bottom to the pair of wheels (9), defined by two first beams (151) connected to the same end by a first cross member (152);
- a second movable fork (16), defined by two second beams (161) connected to the same end by a second cross member (162); said first and second forks (15,16) being on a same side, opposite the one where the first and second cross members (152,162) are present, and open so as to define an access opening whereby the second frame (10) can embrace the first frame (6);
- a plurality of arms (17) connected to the first and second forks (15,16); each arm belonging to the plurality of arms (17) having a first end (171), hinged to the first fixed fork (15), and a second end (172), hinged to the second movable fork (16).

10. The motor pump (1) according to claim 9, wherein said movement means (10) is defined by an actuator (18), preferably hydraulic, so as to favour a movement of the second movable fork (16) away from or towards the first fixed fork (15).

11. The motor pump (1) according to claims 9 and 10, wherein said actuator (18) has a sleeve (181) hinged to the first cross member (152) and a rod (182) hinged to the second cross member (162); said first and second forks (15,16) being movable, under the action of the at least one actuator (18), from a compacted configuration in which the two second beams (161) are resting on the two first beams (151), the first and second beams (151,161) being at a lower height than the height defined by the plurality of pins (13) to allow the second frame (8) to embrace the first frame (6), to an extended configuration, in which the second beams (161) are distanced from the first beams (151) so as to allow the second beams (161) to engage the plurality of pins (13) and lift the first frame (6) on board the second frame (8).

12. The motor pump (1) according to claim 1, wherein said base (7) has at the bottom, on the opposite side from where the pumping unit (2) is provided, a fifth wheel (19) operatively activatable when the first frame (6) is resting on the ground; said fifth wheel (19) allowing the rotation of the base (7) and thus of the first frame (6) about a vertical axis (Y).

13. The motor pump (1) according to claim 11, wherein said sleeve (181) is hinged to a towbar (153) connected to the first cross member (152).

14. The motor pump (1) according to claims 1 and 9, wherein said base (7) has a transverse dimension of extension (d) and said first and second beams (151,161) defining a distance between centres (D); said distance between centres (D) being greater than the transverse dimension of extension (d) to allow the second frame (8) to embrace the base (7) with the first and second forks (15,16).
